# EUROPEAN PATENT APPLICATION

(11) **EP 4 804 006 A1**
(43) Date of publication of application: **09.09.2026**
(21) Application number: 24903844.9
(22) Date of filing: 27.05.2024
(51) Int. Cl.: G06F 3/14, G06F 1/16, H01F 7/00, G06F 3/0484, B60K 35/10, B60K 35/22, B60K 35/28, B60K 35/53, B60K 35/60, B60K 35/80, B60K 35/81, B60R 11/02

(54) **ELECTRONIC DEVICE, METHOD, AND STORAGE MEDIUM FOR CONTROLLING DISPLAY**

(30) Priority: 12.12.2023 KR 20230179638; 15.02.2024 KR 20240022066
(71) Applicant: Samsung Electronics Co., Ltd., Suwon-si, Gyeonggi-do 16677 (KR)
(72) Inventor: AHN, Soho, Suwon-si, Gyeonggi-do 16677 (KR); MOON, Choonkyoung, Suwon-si, Gyeonggi-do 16677 (KR); LEE, Kyungjin, Suwon-si, Gyeonggi-do 16677 (KR); LEE, Seungjoon, Suwon-si, Gyeonggi-do 16677 (KR)
(74) Representative: Gulde & Partner
(86) International application number: PCT/KR2024/007176
(87) International publication number: WO 2025/127272

(57) **Abstract**

Provided are an electronic device, a method, and a storage medium for controlling a plurality of displays. The electronic device comprises: the plurality of displays; a processor; and a memory for storing instructions executed by the processor. The instructions cause an operation in a default state in which a first tilt angle associated with a first display and a second tilt angle associated with a second display are individually adjusted. During the operation in the default state, the instructions cause an operation of receiving a user input to be performed. When the user input is a first user input for changing from the default state to a first mode for one user, the instructions cause an operation to be performed to adjust a tilt angle of one of the first display and the second display to match a tilt angle of the remaining one display, and to move at least one of the plurality of displays so that the first display and the second display are positioned adjacent to each other on the same plane. When the user input is a second user input for changing to a second mode for a plurality of users, the instructions cause an operation to be performed to adjust tilt angles of both the first display and the second display, and to move at least one of the plurality of displays so that the first display and the second display are positioned adjacent to each other on the same plane.

## Description

### Technical Field

Embodiments of this document relate to an electronic device, a method, and a storage medium, and, to for example, an electronic device, a method, and a storage medium for controlling a display.

### Background Art

Many electronic devices are mounted to a vehicle to provide convenience to a user and to enable safer driving. Also, a display may be mounted to display content for providing a variety of information and joy to the user. The display mounted to the vehicle may display stored content and/or content received from the outside.

The above-described information may be provided as the related art to help understanding of the disclosure. No claim or decision is made as to whether any of the above contents may be applied as the prior art in relation to the disclosure.

### Disclosure of Invention

### Technical Problem

An electronic device and a method for controlling a display set forth herein is to provide a display with the large screen by making a plurality of displays adjacent to each other in response to a selection of a user.

### Solution to Problem

An electronic device according to various embodiments set forth herein may include a plurality of displays including a first display and a second display; at least one processor; and memory configured to store instructions executed by the at least one processor. The instructions stored in the memory may cause the electronic device to operate in a default state in which a first tilt angle related to the first display and a second tilt angle related to the second display are individually adjusted. The instructions stored in the memory may cause the electronic device to perform an operation of receiving a user input when operating in the default state. The instructions stored in the memory may cause the electronic device to perform an operation of, if the user input is a first user input that changes from the default state to a first mode of displaying content across the first display and the second display for a single user, adjusting a tilt angle of one of the first display and the second display to match a tilt angle of the remaining one of the first display and the second display, and moving at least one the plurality of displays such that the first display and the second display are positioned adjacent to each other on the same plane. The instructions stored in the memory may cause the electronic device to perform an operation of, if the user input is a second user input that changes from the default state to a second mode of displaying the content across the first display and the second display for a plurality of users, adjusting the tilt angle of both the first display and the second display and moving at least one of the plurality of displays such that the first display and the second display are positioned adjacent to each other on the same plane.

A method of controlling a plurality of displays including a first display and a second display according to various embodiments set forth herein may include operating in a default state in which a first tilt angle related to the first display and a second tilt angle related to the second display are individually adjusted. The method may receive a user input when operating in the default state. The method may, if the user input is a first user input that changes from the default state to a first mode of displaying content across the first display and the second display for a single user, adjust a tilt angle of one of the first display and the second display to match a tilt angle of the remaining one of the first display and the second display, and move at least one the plurality of displays such that the first display and the second display are positioned adjacent to each other on the same plane. The method may, if the user input is a second user input that changes from the default state to a second mode of displaying the content across the first display and the second display for a plurality of users, adjust the tilt angle of both the first display and the second display and move at least one of the plurality of displays such that the first display and the second display are positioned adjacent to each other on the same plane.

Instructions of a non-transitory computer-readable recording medium storing a program that performs a method of controlling a display of an electronic device according to various embodiments set forth herein may cause the electronic device to operate in a default state in which a first tilt angle related to the first display and a second tilt angle related to the second display are individually adjusted. The instructions may cause the electronic device to perform an operation of receiving a user input when operating in the default state. The instructions may cause the electronic device to perform an operation of, if the user input is a first user input that changes from the default state to a first mode of displaying content across the first display and the second display for a single user, adjusting a tilt angle of one of the first display and the second display to match a tilt angle of the remaining one of the first display and the second display, and moving at least one of the plurality of displays such that the first display and the second display are positioned adjacent to each other on the same plane. The instructions may cause the electronic device to perform an operation of, if the user input is a second user input that changes from the default state to a second mode of displaying the content across the first display and the second display for a plurality of users, adjusting the tilt angle of both the first display and the second display and moving at least one of the plurality of displays such that the first display and the second display are positioned adjacent to each other on the same plane.

### Advantageous Effects of Invention

Various embodiments set forth herein may provide a display with the large screen by making a plurality of displays adjacent to each other.

The effects of the disclosure are not limited to the above-described effects, and still other effects not mentioned herein will be clearly understood by one of ordinary skill in the art from the following description.

### Brief Description of Drawings

FIG. 1 is a block diagram illustrating an electronic device in a network environment according to various embodiments.
FIG. 2 is a block diagram describing the constitution of an electronic device according to various embodiments.
FIG. 3 illustrates a vehicle mounted with a display according to various embodiments.
FIG. 4a, FIG. 4b, and FIG. 4c illustrate a process of changing to an extended mode according to various embodiments.
FIG. 5a, FIG. 5b, FIG. 5c, FIG. 5d, FIG. 5e, FIG. 5f, and FIG. 5g illustrate a method of displaying an indicator in response to an extended mode change according to various embodiments.
FIG. 6a and FIG. 6b illustrate the side structure of a display according to various embodiments.
FIG. 7a, FIG. 7b, and FIG. 7c illustrate a process of moving a plurality of displays viewed at various angles in the direction that makes them adjacent to each other according to various embodiments.
FIG. 8a, FIG. 8b, and FIG. 8c illustrate a process of making a plurality of displays viewed at various angles adjacent to each other according to various embodiments.
FIG. 9a, FIG. 9b, and FIG. 9c illustrate a plurality of adjacent displays viewed at various angles according to various embodiments.
FIG. 9d illustrates the combined structure of a plurality of displays according to various embodiments.
FIG. 10 illustrates an example of adjusting the angle of a plurality of adjacent displays according to various embodiments.
FIG. 11 illustrates an example of adjusting the distance of a plurality of adjacent displays according to various embodiments.
FIG. 12 illustrates a center location of a plurality of adjacent displays according to various embodiments.
FIG. 13a and FIG. 13b illustrate an example of rotating a display according to various embodiments.
FIG. 14 is a flowchart describing a display control method according to various embodiments.

### Mode for the Invention

Embodiments of the disclosure are described in detail with reference to the accompanying drawings, such that one of ordinary skill in the art to which the disclosure pertains may easily carry out. However, the disclosure may be implemented in various different forms and is not limited to the embodiments described herein. When describing the drawings, the same or similar reference numerals may be used for the same or similar components. Also, for clarity and conciseness, description of well-known functions and configuration may be omitted.

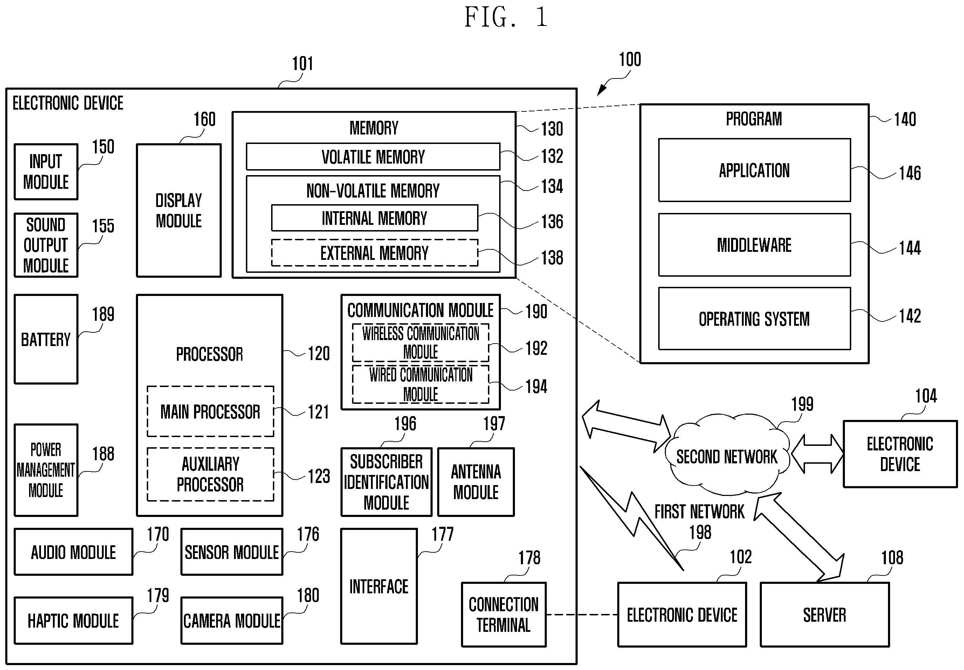

FIG. 1 is a block diagram illustrating an electronic device 101 in a network environment 100 according to various examples. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an example, the electronic device 101 may communicate with the electronic device 104 via the server 108. According to an example, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some examples, at least one of the components (e.g., the connection terminal 178) may be omitted from the electronic device 101, or one or more other components may be added in the electronic device 101. In some examples, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one example, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an example, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an example, the auxiliary processor 123 (e.g., an image signal processor or a communication processor) may be implemented as part of another component (e.g., the camera module 180 or the communication module 190) functionally related to the auxiliary processor 123. According to an example, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory may include at least one of an internal memory 136 and an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an example, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an example, the display module 160 may include a touch sensor adapted to detect a touch, or a pressure sensor adapted to measure the intensity of force incurred by the touch.

The audio module 170 may convert a sound into an electrical signal and vice versa. According to an example, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an example, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an example, the interface 177 may include, for example, a high definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an example, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an example, the haptic module 179 may include, for example, a motor, a piezoelectric element, or an electric stimulator.

The camera module 180 may capture a still image or moving images. According to an example, the camera module 180 may include one or more lenses, image sensors, image signal processors, or flashes.

The power management module 188 may manage power supplied to the electronic device 101. According to one example, the power management module 188 may be implemented as at least part of, for example, a power management integrated circuit (PMIC).

The battery 189 may supply power to at least one component of the electronic device 101. According to an example, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an example, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an example, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an example, the antenna module 197 may include an antenna including a radiating element composed of a conductive material or a conductive pattern formed in or on a substrate (e.g., a printed circuit board (PCB)). According to an example, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an example, another component (e.g., a radio frequency integrated circuit (RFIC)) other than the radiating element may be additionally formed as part of the antenna module 197.

According to various examples, the antenna module 197 may form an mmWave antenna module. According to an example, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an example, all or some of operations to be executed at the electronic device 101 may be executed at one or more of the external electronic devices (e.g. electronic devices 102 and 104 or the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an example, the external electronic device 104 may include an internet-of-things (IoT) device. The server 108 may be an intelligent server using machine learning and/or a neural network. According to an example, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various examples may be one of various types of electronic devices. The electronic devices may include, for example, a portable communication device (e.g., a smartphone), a computer device, a portable multimedia device, a portable medical device, a camera, a wearable device, or a home appliance. According to an example of the disclosure, the electronic devices are not limited to those described above.

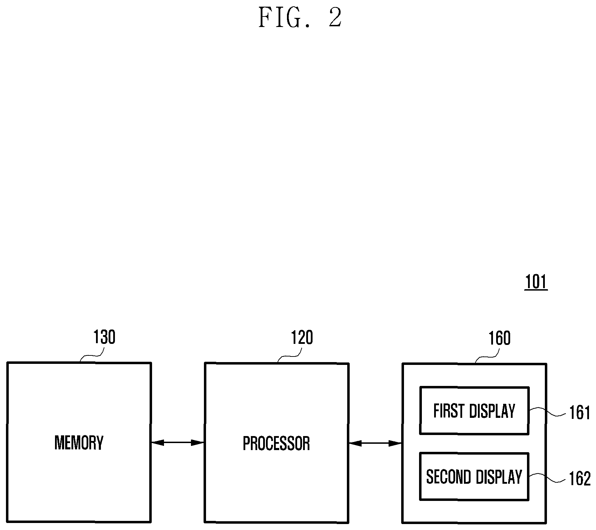

FIG. 2 is a block diagram describing the constitution of an electronic device according to various embodiments.

With reference to FIG. 2, the electronic device 101 may include the memory 130, the processor 120, and the display 160.

The memory 130 (e.g., memory 130 of FIG. 1) may store data, algorithms, programs, instructions, and content used to perform functions of the electronic device 101 (e.g., electronic device 101 of FIG. 1). The instructions stored in the memory 130 may be loaded to the processor 120, and executed.

The display 160 (e.g., display 160 of FIG. 1) may include one or more displays. As an example, the display 160 may include a first display 161 and a second display 162, or may include three or more displays. The display 160 may be implemented as a touch display. The display 160 may display content stored in the memory 130, content stored in an external memory, and/or content received from an external device (e.g., electronic device 102, 104 of FIG. 1).

The display 160 may operate in a default state. For example, the default state may be a state in which the first display 161 and the second display 162 are separate from each other and independently display content. The first display 161 may be positioned at a first distance from a first user and may display first content under control of the first user. The first display 161 may correspond to the first user. That is, the first display 161 may display the first content under control of the first user. The second display 162 may be positioned at a second distance from a second user and may display second content under control of the second user. The second display 162 may correspond to the second user. That is, the second display 162 may display the second content under control of the second user. As an example, the first distance and the second distance may be the same (or nearly the same) distance. As an example, in the default state, the first distance of the first display 161 and the second distance of the second display 162 may be individually adjusted. As an example, in the default state, the tilt angle of the first display 161 and the tilt angle of the second display 162 may be individually adjusted. For example, the tilt angle may be an angle at which the display 160 is tilted relative to a vertical line or a difference value from a preset angle from a vertical direction.

For example, the display 160 may change from the default state to an extended mode in response to a user input. The extended mode may include a mode in which the first display 161 and the second display 162 are adjacent (or mechanically combined or connected) and operate as a single display. The extended mode may be a mode for displaying a single piece of content on the plurality of displays as a large screen. That is, the extended mode may be a mode for displaying content across the first display 161 and the second display 162 (across the first display and the second display). The adjacent first display 161 and second display 162 may display the same third content. For example, the first display 161 may display a first portion of the third content (e.g., left portion of third content), and the second display 162 may display a second portion of the third content (e.g., right portion of third content), such that the first display 161 and the second display 162 may display the full third content.

The processor 120 (e.g., processor 120 of FIG. 1) may control each component of the electronic device 101. The electronic device 101 may include one or more processors 120. For example, the processor 120 may correspond to a plurality of processors that split and collectively perform a plurality of functions between the processors.

The processor 120 may operate the plurality of displays in the default state. As an example, the processor 120 may set the plurality of displays to the default state. For example, the processor 120 may individually adjust the first tilt angle related to the first display 161 and the second tilt angle related to the second display 162 in the default state. When the plurality of displays operate in the default state, the processor 120 may receive the user input.

For example, the processor 120 may receive the user input from the first user. As an example, when the display 160 is implemented as a touch display, the processor 120 may receive the user input through the first display 161. The processor 120 may identify the input received from the first user based on the input received on the first display 161.

In another example, the processor 120 may receive the user input through a communication interface (e.g., communication module 190 of FIG. 1). As an example, the processor 120 may receive identification information of a first terminal device of the first user (e.g., smartphone of first user) and/or identification information of a second terminal device of the second user (e.g., smartphone of second user) through the communication interface. As an example, the processor 120 may transmit the identification information of the first display 161 to the first terminal device and/or the identification information of the second display 162 to the second terminal device through the communication interface. When the processor 120 receives the user input through the communication interface, the processor 120 may receive the identification information of the terminal device (e.g., first terminal device or second terminal device) and/or identification information of the display 160 (e.g., first display 161 or second display 162). If the received identification information includes the identification information of the first terminal device and/or the identification information of the first display 161, the processor 120 may control the first display 161 based on the received user input. Alternatively, if the received identification information includes the identification information of the second terminal device and/or the identification information of the second display 162, the processor 120 may control the second display 162 based on the received user input. When the processor 120 receives the user input through the communication interface, the processor 120 may receive the identification information of the first terminal device and/or the identification information of the first display 161 together. The processor 120 may identify the input received from the first user based on the received identification information.

For example, the user input may be an input that changes the display 160 from the default state to the extended mode. As an example, the extended mode may include the first mode and the second mode. The first mode may be the extended mode for a single user, and the second mode may be the extended mode for a plurality of users. As an example, a single user may be seated in the rear seat of a vehicle, and a plurality of users may be seated therein. When a single user is seated, the processor 120 may change the plurality of displays from the default state to the first mode. When the plurality of users are seated, the processor 120 may change the plurality of displays from the default state to the second mode.

For example, the processor 120 may display a menu for selecting the default state, the first mode, and the second mode on the first display 161 and/or the second display 162. For example, the default state may be a state for individually displaying content on the first display 161 and/or the second display 162. The first mode may be a mode for displaying content across the first display 161 and the second display 162 for a single user. The second mode may be a mode for displaying the content across the first display 161 and the second display 162 for the plurality of users. The processor 102 may receive the user input that selects one from the displayed menu.

As an example, if the received user input is an input that changes to the first mode, the processor 120 may adjust the tilt angle of one of the first display 161 and the second display 162 to match the tilt angle of the remaining one of the first display 161 and the second display 162, and the processor 120 may move at least one of the plurality of displays such that the first display 161 and the second display 162 are positioned adjacent to each other on the same plane. For example, the processor 120 may position the first display 161 and the second display 162 at the first location in the first mode. As an example, the first location may be a location corresponding to a central area of a single user.

As an example, if the received user input is an input that changes to the second mode, the processor 120 may adjust the tilt angle of both the first display 161 and the second display 162. In addition, the processor 120 may move one of the plurality of displays such that the first display 161 and the second display 162 are positioned adjacent to each other on the same plane. For example, the processor 120 may position the first display 161 and the second display 162 at a second location different from the first location in the second mode. As an example, the second location may be a location corresponding to a central area of a group of the plurality of users. As an example, the second location may be a location corresponding to an area in which the plurality of users have the overlapping viewing angle.

For example, the processor 120 may automatically change to the first mode or the second mode. The electronic device 101 may include a sensor (e.g., sensor module 176 of FIG. 1). The sensor may detect a user. The processor 120 may identify the number of users based on information detected by the sensor. For example, the sensor may include an image sensor (e.g., camera), infrared sensor, an ultrasonic sensor, a biosensor, an optical measurement sensor (OMS), a depth measurement sensor (DMS), Time-of-Flight (TOF), a seat sensor, and/or a seat angle sensor. The OMS refers to the optical measurement sensor and may acquire user information using light. The DMS refers to the depth measurement sensor and may acquire user information. The ToF may acquire user information by measuring a travel time of light. The image sensor may photograph the user and may acquire user information based on a captured image. The seat sensor may detect whether a user is seated in each seat. The seat angle sensor may detect the angle of the seat. If a single user is identified, the processor 120 may determine the received user input as the input that changes to the first mode. If the plurality of users are identified, the processor 120 may determine the received user input as the input that changes to the second mode.

As an example, the processor 120 may identify users who are actually viewing (or may view) the content, may identify the number of users based on the users who are viewing (or may view) the content, and may change to a mode corresponding to the number of identified users. As an example, even when the plurality of users are detected, if the processor 120 detects through the sensor that remaining users except one are not looking at the display 160 due to sleep and/or other activities, the processor 120 may determine that there is only one user to actually use the extended mode and may change to the first mode.

As an example, if the user input is received from the first user, the processor 120 may display a message that requests approval of the extended mode (e.g., first mode or second mode) on the second display 162. If the processor 120 receives the user input that approves the extended mode, the processor 120 may match the tilt angle of the plurality of displays by adjusting the tilt angle of at least one display among the plurality of displays. As an example, in addition to the tilt angle, the pivot angle, the swivel angle, and/or the elevation height may be adjusted in consideration of a preset value (e.g., default value) or the number of users. The processor 120 may make the plurality of displays adjacent to each other on the same plane by moving at least one display among the plurality of displays in the direction that makes them adjacent to each other.

When the processor 120 performs an operation of making the plurality of displays adjacent to each other, the processor 120 may provide visual feedback to each of the first display 161 and the second display 162 to make it possible to recognize the state of the display 160. For example, the visual feedback may include an indicator (or marker). The indicator may include a first indicator that indicates the distance between the plurality of displays and/or a second indicator and a third indicator related to the tilt angle of a corresponding display in each of the plurality of displays. As an example, the second indicator may be an indicator related to the tilt angle of the first display 161, and the third indicator may be an indicator related to the tilt angle of the second display 162.

For example, the first indicator may include a dot, a shape, an arrow, or a pointer. The processor 120 may display the first indicator in the central area of the horizontal direction of each of the first display 161 and the second display 162. The processor 120 may move the first display 161 and/or the second display 162. The processor 120 may move the first indicator based on the distance between the plurality of displays according to the movement of the first display 161 and/or the second display 162. As an example, if the first display 161 and the second display 162 move in the direction that makes them adjacent to each other, the distance between the first display 161 and the second display 162 may become closer. The processor 120 may move the first indicator in a direction in which the distance between the first indicators displayed on the respective displays decreases, based on the distance between the plurality of displays that have become closer. If the first display 161 and the second display 162 are adjacent to each other, the first indicators displayed on the respective displays may meet at the boundary area of the displays.

As an example, the processor 120 may adjust the size of the first indicator as the display on which the first indicator is displayed moves forward or backward. If the first display 161 moves toward the first user (or seat corresponding to first user), the processor 120 may control the size of the first indicator displayed on the first display 161 to increase. If the second display 162 moves in an opposite direction of the second user (or seat corresponding to second user), the processor 120 may control the size of the first indicator displayed on the second display 162 to decrease.

For example, the second indicator and the third indicator may include lines. The processor 120 may display the second indicator in an upper portion of a display with the large tilt angle relative to the vertical line and may display the second indicator in a lower portion of a display with the small tilt angle among the plurality of displays. As an example, the tilt angle of the first display 161 may be larger than the tilt angle of the second display 162 relative to the vertical line. The processor 120 may display the second indicator (e.g., first line) in the upper portion of the first display 161, and may display the third indicator (e.g., second line) in the lower portion of the second display 162. The processor 120 may adjust the tilt angle of the first display 161 and/or the second display 162 to match the tilt angle between the plurality of displays. If the tilt angle of the first display 161 decreases, the processor 120 may move the second indicator displayed in the upper portion of the first display 161 to the central area. If the tilt angle of the second display 162 increases, the processor 120 may move the third indicator displayed in the lower portion of the second display 162 to the central area. If the plurality of displays have the same tilt angle, the second indicator displayed on the first display 161 and the third indicator displayed on the second display 162 may be positioned at the center line.

If the plurality of displays are adjacent to each other, the processor 120 may adjust the tilt angle and/or distance between the plurality of adjacent displays based on a preset reference location. For example, the preset reference location may be a location of the user or a location of the seat. The processor 120 may control the plurality of adjacent displays to the tilt angle and/or distance at which the user may optimally view the content. As an example, if a single user is present in the vehicle, the processor 120 may adjust the tilt angle and/or distance of the plurality of adjacent displays based on a location of a single user and a location of a seat corresponding to the single user. The adjusted tilt angle and/or distance may be the tilt angle and/or distance corresponding to the first mode. As an example, if the plurality of users are present in the vehicle, the processor 120 may adjust the tilt angle and/or distance of the plurality of adjacent displays based on locations of the plurality of users and/or locations of a plurality of seats corresponding to the plurality of users. The adjusted tilt angle and/or distance may be the tilt angle and/or distance corresponding to the second mode. As an example, in addition to the tilt angle, the pivot angle, the swivel angle, and/or the elevation height may be adjusted in consideration of a preset value (e.g., default value) or the number of users

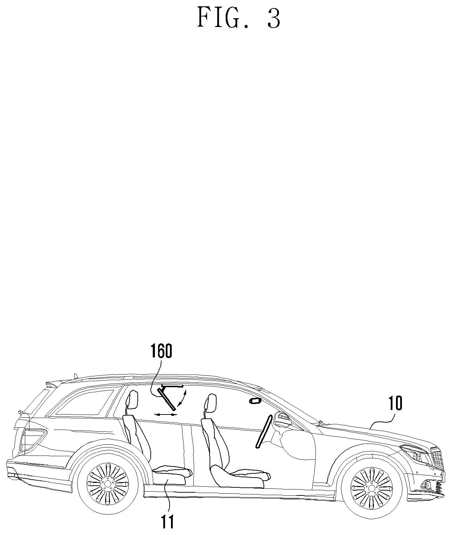

FIG. 3 illustrates a vehicle mounted with a display according to various embodiments.

With reference to FIG. 3, a vehicle 10 may include a seat 11 and the display 160. One, two, or three users may be seated in the seat 11, and the vehicle 10 may include a plurality of displays 160 (e.g., first display 161 and second display 162). For example, the first display 161 may correspond to the first user corresponding to the front surface of the first display 161, and the second display 162 may correspond to the second user corresponding to the front surface of the second display 162. As an example, the vehicle 10 may include a third display, and may correspond to a third user corresponding to the front surface of the third display.

The display 160 may be arranged on the ceiling of the vehicle 10. The display 160 may rotate up and down, may rotate left and right, and/or may move forward and backward under control of the electronic device 101. As an example, when the user is not seated in the seat 11 (or, when display 160 is not used), the electronic device 101 may position the display 160 with the front surface of the display 160 (e.g., screen surface) facing the floor and parallel to the ceiling surface. When the user is seated in the seat 11 (or, when display 160 is used), the electronic device 101 may rotate the display 160 downward based on the hinge. When the display 160 rotates downward, the front surface of the display 160 may face the direction in which the user is located. The electronic device 101 may adjust the tilt angle by rotating the display 160 up and down relative to a preset location, and may adjust the center location by moving the display 160 left and right. For example, the preset location may include a location of the seat 11 corresponding to the display 160 or a location of the user that is seated in the seat 11. If the seat 11 rotates, the electronic device 101 may rotate the display 160 in the left and right directions according to rotation of the seat 11.

In the default state, the electronic device 101 may individually control the plurality of displays. For example, the electronic device 101 may adjust the tilt angle by rotating the first display 161 up and down based on the first seat or the first user seated in the first seat, and may adjust the center location by moving the first display in left and right directions. If the first seat rotates, the electronic device 101 may rotate the first display 161 in the left and right directions according to rotation of the first seat. The electronic device 101 may control the second display 162 based on the second seat or the second user seated in the second seat in the same manner.

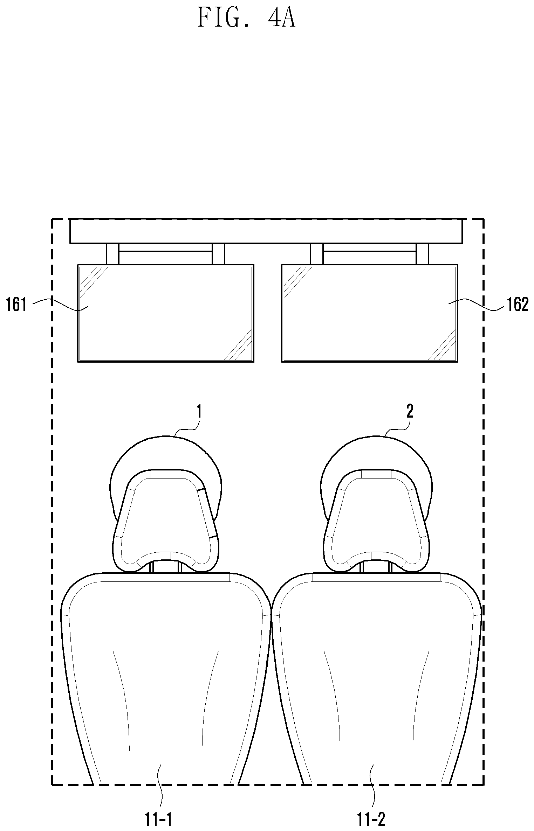

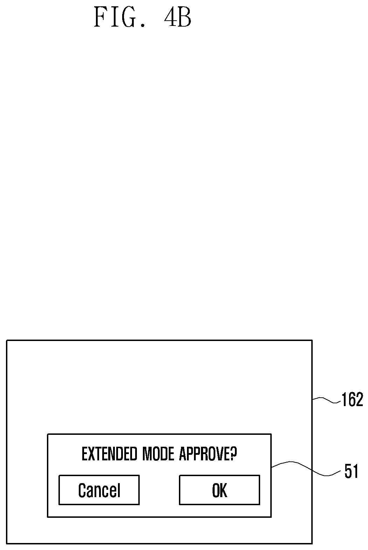

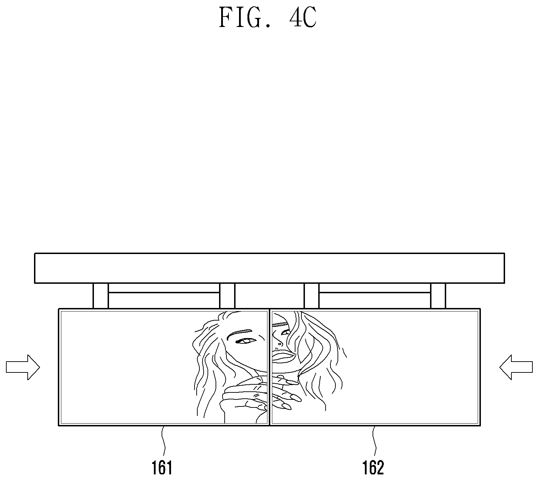

FIG. 4a, FIG. 4b, and FIG. 4c illustrate a process of changing to an extended mode according to various embodiments.

With reference to FIG. 4a, the first display 161 and the second display 162 in the default state are illustrated. For example, two users may ride in the vehicle 10. A first user 1 may be seated in a first seat 11-1, and a second user 2 may be seated in a second seat 11-2.

The electronic device 101 may control the first display 161 to be separated at the first tilt angle and the first distance relative to the first user 1 or the first seat 11-1 on which the first user 1 is seated. Also, the electronic device 101 may control the second display 162 to be separated at the second tilt angle and second distance relative to the second user 2 or the second seat 11-2 on which the second user 2 is seated. For example, the above-described tilt angle (e.g., first tilt angle or second tilt angle) may be the tilt angle that is nearly horizontal with respect to the front of the user (e.g., first user 1 or second user 2) or the seat (e.g., first seat 11-1 or second seat 11-2). As an example, if the first user 1 (or first seat 11-1) is reclined about 10 degrees, the electronic device 101 may tilt the first display 161 about 10 degrees. If the second user 2 (o, second seat 11-2) is reclined about 30 degrees, the electronic device 101 may tilt the second display 162 about 30 degrees. The above-described distance (e.g., first distance or second distance) may be the distance between the user and the seat. As an example, the optimal distance between the user viewing content and the display may be about 1m. If the first user 1 (or first seat 11-1) moves about 20 cm backward, the electronic device 101 may move the first display 161 about 20 cm toward the first user 1 (or first seat 11-1). If the second user 2 (or second seat 11-2) moves about 10 cm forward, the electronic device 101 may move the second display 162 about 10 cm in the opposite direction of the second user 2 (or second seat 11-2). Since the electronic device 101 may maintain the distance of about 1 m between the user (e.g., first user 1 or second user 2) (or seat (e.g., first seat 11-1 or second seat 11-2)) and the display (e.g., first display 161 or second display 162), the first distance and the second distance may be the same (or nearly the same) distance.

With reference to FIG. 4b, an example of an extended mode approval message is illustrated. The electronic device 101 may receive the user input from the first user 1. For example, the first display 161 may include a touch display, and the electronic device 101 may receive the user input through the first display 161. As another example, the electronic device 101 may receive a user instruction through the communication interface. The electronic device 101 may transmit identification information of the first display 161 to the first terminal device of the first user 1 in advance, or may receive identification information of the first terminal device from the first terminal device. The electronic device 101 may store the identification information of the first display 161 or the identification information of the first terminal device. The electronic device 101 may receive the identification information of the first display 161 or the identification information of the first terminal device along with the user input. The electronic device 101 may compare the received identification information (e.g., identification information of first display 161 or identification information of first terminal device) to the stored identification information, and may identify the user input received from the first user 1 corresponding to the first display 161.

For example, the user input may be an input that changes the display 160 from the default state to the extended mode. As an example, the extended mode may include a first mode and a second mode. The first mode may be the extended mode for a single user, and the second mode may be the extended mode for a plurality of users. As an example, a single user may be seated in the back seat of the vehicle, and the plurality of users may be seated therein. When a single user is seated, the processor 120 may change the plurality of displays from the default state to the first mode. When the plurality of users are seated, the processor 120 may change the plurality of displays from the default state to the second mode.

As an example, the electronic device 101 may display a menu for selecting the default state, the first mode, and the second mode on the first display 161 and/or the second display 162. The electronic device 101 may receive the user input for selecting one from the displayed menu, and may change to the first mode or the second mode based on the received input.

As an example, the electronic device 101 may automatically change to the first mode or the second mode. The electronic device 101 may include a sensor (e.g., sensor module of 176 FIG. 1). The sensor may detect the user. The electronic device 101 may identify the number of users based on information detected by the sensor. For example, the sensor may include an image sensor (e.g., camera), an infrared sensor, an ultrasonic sensor, a biosensor, an optical measurement sensor (OMS), a depth measurement sensor (DMS), Time-of-Flight (TOF), a seat sensor, and/or a seat angle sensor. If a single user is identified, the processor 120 may determine the user input as an input that changes to the first mode. If the plurality of users are identified, the processor 120 may determine the received user input as an input that changes to the second mode.

As an example, the electronic device 101 may inquire (or request) from another user whether to approve the extended mode (e.g., second mode). Since the electronic device 101 has received an instruction to change to the extended mode from the first user 1 corresponding to the first display 161, the electronic device 101 may inquire whether to approve from the second user 2 corresponding to the second display 162. As illustrated in FIG. 4b, the electronic device 101 may display a message 51 inquiring whether to approve the extended mode on the second display 162.

The electronic device 101 may receive an input that approves the extended mode from the second user 2. For example, the second display 162 may include a touch display, and the electronic device 101 may receive the user input through the second display 162. As another example, the electronic device 101 may receive the user input through the communication interface. The electronic device 101 may transmit identification information of the second display 162 to the second terminal device of the second user 2 in advance or may receive identification information of the second terminal device from the second terminal device. The electronic device 101 may store the identification information of the second display 162 or the identification information of the second terminal device. The electronic device 101 may receive the identification information of the second display 162 or the identification information of the second terminal device along with the approval input of the extended mode. The electronic device 101 may compare the received identification information (e.g., identification information of second display 162 or identification information of second terminal device) to the stored identification information, and may identify the approval input received from the second user 2 corresponding to the second display 162. As an example, when changing to the first mode, the electronic device 101 may omit an operation of displaying the message 51 that inquires whether to approve the extended mode.

With reference to FIG. 4c, the plurality of displays changed to the extended mode are illustrated. If the electronic device 101 receives the input that approves the extended mode from the second user 2, the electronic device 101 may make the first display 161 and the second display 162 adjacent to each other to operate as a single display with the large screen.

The electronic device 101 may match the tilt angle of the plurality of displays by adjusting the tilt angle of the first display 161 and/or the second display 162. The electronic device 101 may move the first display 161 and/or the second display 162 in a direction that makes them adjacent to each other.

As an example, when the electronic device 101 changes the plurality of displays to the first mode, the electronic device 101 may adjust the tilt angle of one of the first display 161 and the second display 162 to match the tilt angle of the remaining one of the first display 161 and the second display 162. Additionally, the electronic device 101 may move at least one of the plurality of displays such that the first display 161 and the second display 162 are positioned adjacent to each other on the same plane. For example, the electronic device 101 may position the first display 161 and the second display 162 at the first location in the first mode. As an example, the first location may be a location corresponding to a central area of a single user.

As an example, when electronic device 101 changes the plurality of displays to the second mode, the electronic device 101 may adjust the tilt angle of both the first display 161 and the second display 162. Additionally, the electronic device 101 may move one of the plurality of displays such that the first display 161 and the second display 162 are positioned adjacent to each other on the same place. For example, the electronic device 101 may position the first display 161 and the second display 162 at the second location different from the first location in the second mode. As an example, the second location may be a location corresponding to a central area of a group of the plurality of users. As an example, the second location may be a location corresponding to an area in which viewing the plurality of users have the overlapping viewing angle.

For example, the first side. (e.g., right side) of the first display 161 and the second side (e.g., left side) of the second display 162 may be adjacent to each other. As an example, a protruding portion may be formed on the first side of the first display 161, and an insertion groove may be formed on the second side of the second display 162. The protruding portion of the first display 161 may insert into the insertion groove of the second display 162. As an example, the first side of the first display 161 may be formed with an uneven structure of a first shape, and the second side of the second display 162 may be formed with an uneven structure of a second shape corresponding to (or combinable with) the first shape. The uneven structure of the first shape of the first display 161 and the uneven structure of the second shape of the second display 162 may be combined (or adjacent, connected). A coupling member may be provided to the protruding portion (or uneven structure of first shape) of the first display 161 and the insertion groove (or uneven structure of second shape) of the second display 162. For example, the coupling member may be a magnet or an electromagnet. When the coupling member is the magnet, the first display 161 and the second display 162 may be strongly maintained in an adjacent state by the magnetic force of the magnet. When the coupling member is the electromagnet, the electronic device 101 may determine whether the first display 161 and the second display 162 are normally adjacent. When the electronic device 101 determines that the displays are normally adjacent, the electronic device 101 may apply current to the electromagnet to make the adjacence between the first display 161 and the second display 162 strong. That is, when the first display 161 and the second display 162 are adjacent, the first display 161 and the second display 162 may be stably adjacent (or connected) to each other by the lateral structure and the coupling member.

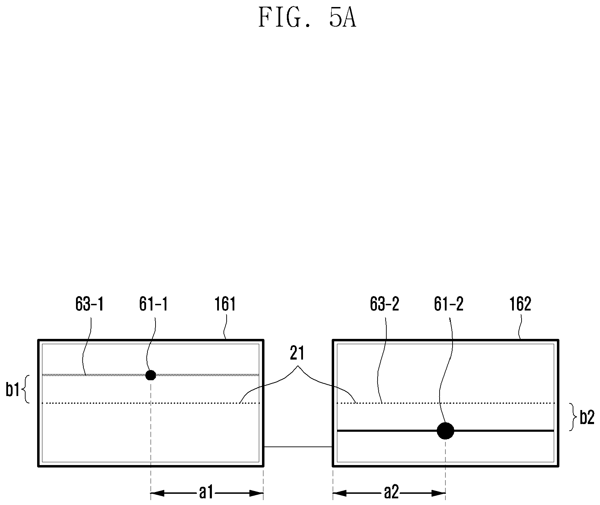

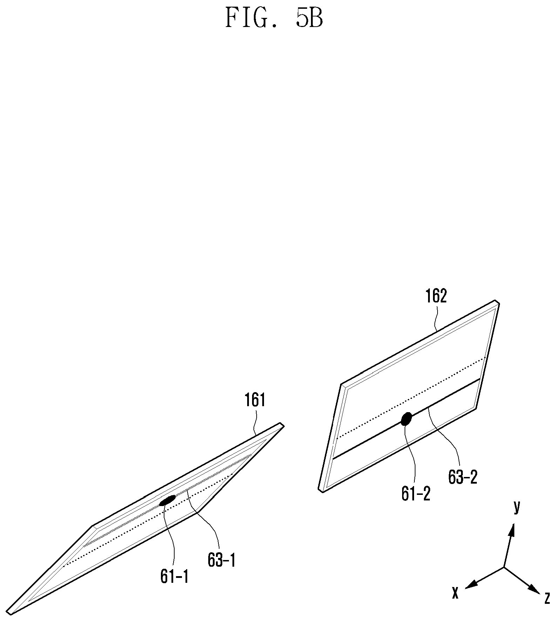

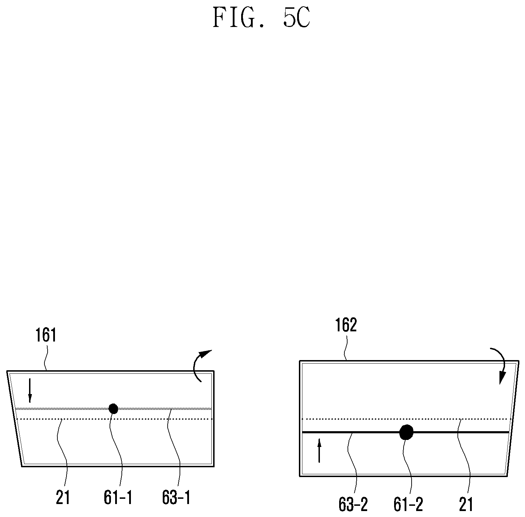

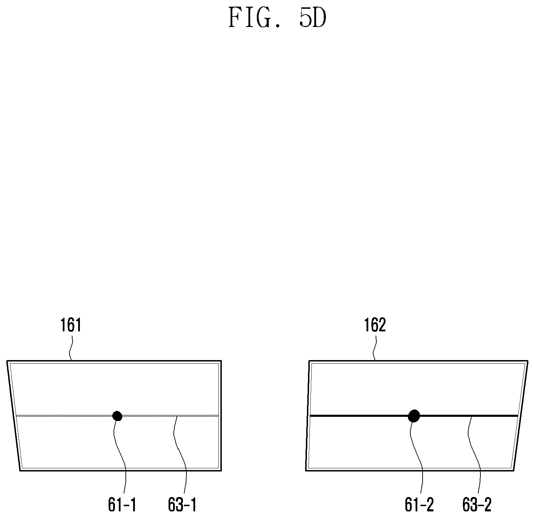

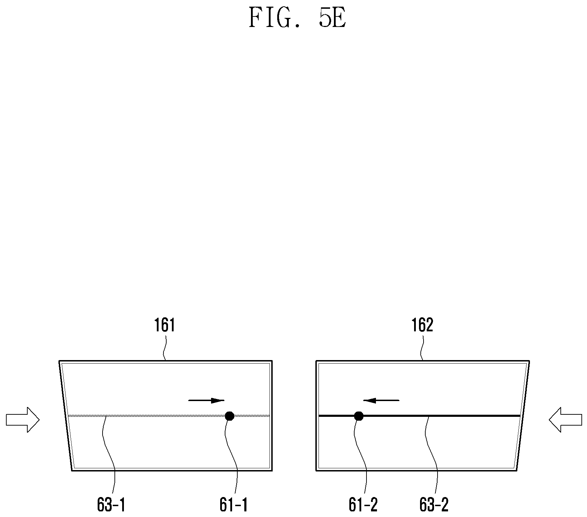

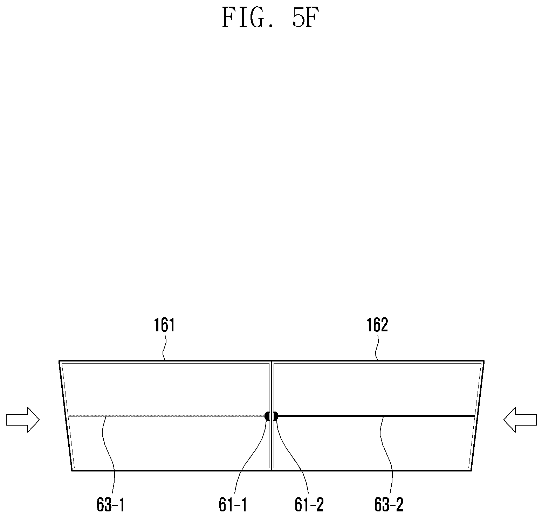

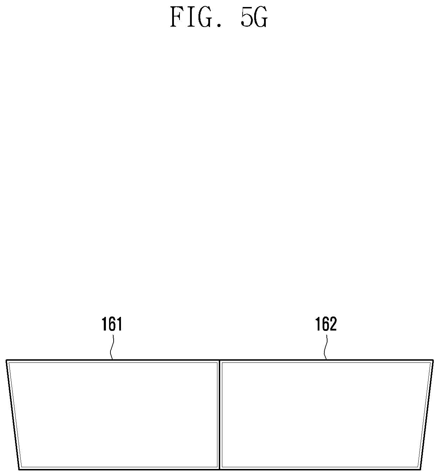

FIG. 5a, FIG. 5b, FIG. 5c, FIG. 5d, FIG. 5e, FIG. 5f, and FIG. 5g illustrate a method of displaying an indicator in response to an extended mode change according to various embodiments. The method of displaying an indicator described with reference to FIG. 5a, FIG. 5b, FIG. 5c, FIG. 5d, FIG. 5e, FIG. 5f, and FIG. 5g may be performed as the same process in the first mode and the second mode.

With reference to FIG. 5a, a front view of the display 160 that displays an indicator is illustrated. With reference to FIG. 5b, a perspective view of the display 160 that displays an indicator is illustrated.

For example, the indicator may include a first indicator indicating the distance between the plurality of displays and/or a second indicator and a third indicator related to the tilt angle of each display among the plurality of displays. The first indicator may include a dot, a shape, an arrow, or a pointer, and the second indicator and the third indicator may include lines.

The electronic device 101 may display a (1-1)-th indicator 61-1 on the first display 161, and may display a (1-2)-th indicator 61-2 on the second display 162. The electronic device 101 may display the (1-1)-th indicator 61-1 in the central area of the first display 161 and may display the (1-2)-th indicator 61-2 in the central area of the second display 162 based on the horizontal direction. The sum of the distance (a1) from the (1-1)-th indicator 61-1 to the first side of the first display 161 and the distance (a2) from the (1-2)-th indicator 61-2 to the second side of the second display 162 may be the relative distance between the first display 161 and the second display 162.

The electronic device 101 may display a second indicator 63-1 on the first display 161, and may display a third indicator 63-2 on the second display 162. The electronic device 101 may display the second indicator or the third indicator in an upper portion (e.g., +y-axis area based on center line 21) of a display with large tilt angle, and may display the second indicator or the third indicator in a lower portion (e.g., -y-axis area based on center line 21) of a display with small tilt angle, based on the vertical line among the plurality of displays. The upper portion of the display may be an upper area based on the center line 21, and the lower portion of the display may be a lower area based on the center line 21. As an example, the tilt angle of the first display 161 may be greater than the tilt angle of the second display 162 based on the vertical line. The electronic device 101 may display the second indicator 63-1 in the upper portion of the first display 161, and may display the third indicator 63-2 in the lower portion of the second display 162. For example, the distance (b1) between the center line 21 and the second indicator 63-1 may be a value related to the tilt angle of the first display 161, and the distance (b2) between the center line 21 and the third indicator 63-2 may be a value related to the tilt angle of the second display 162. The first indicator may be displayed on the second indicator and the third indicator. For example, the (1-1)-th indicator 61-1 of the first display 61-1 may be displayed on the second indicator 63-1, and the (1-2)-th indicator 61-2 of the second display 61-2 may be displayed on the third indicator 63-2.

With reference to FIG. 5c, a process of adjusting the tilt angle of the first display 161 and/or the second display 162 is illustrated. The electronic device 101 may match the tilt angle of the first display 161 and the tilt angle of the second display 162 to make the first display 161 and the second display 162 adjacent to each other. For example, the electronic device 101 may move the second indicator 63-1 to the central area (e.g., center line 21) while reducing the tilt angle of the first display 161. The electronic device 101 may move the third indicator 63-2 to the central area (e.g., center line 21) while increasing the tilt angle of the second display 162.

With reference to FIG. 5d, the first display 161 and the second display 162 with the matching tilt angle are illustrated. If the title angle of the first display 161 and the tilt angle of the second display 162 match, each of the second indicator 63-1 and the third indicator 63-2 may be positioned on the center line 21.

With reference to FIG. 5e, a process of making the first display 161 and/or the second display 162 adjacent to each other is illustrated. If the tilt angle of the first display 161 and the tilt angle of the second display 162 match, the electronic device 101 may move the first display 161 and/or the second display 162 in the direction that makes them adjacent to each other. As the first display 161 and/or the second display 162 move in the direction that make them adjacent to each other, the distance between the first display 161 and the second display 162 may become closer. The electronic device 101 may move the (1-1)-th indicator 61-1 and the (1-2)-th indicator 61-2 based on the distance between the first display 161 and the second display 162. As an example, the electronic device 101 may move the (1-1)-th indicator 61-1 toward the first side (e.g., right side) of the first display 161, and may move the (1-2)-th indicator 61-2 toward the second side (e.g., left side) of the second display 162. As the distance between the first display 161 and the second display 162 decreases, the distance between the (1-1)-th indicator 61-1 and the (1-2)-th indicator 61-2 may also decrease.

With reference to FIG. 5f, the adjacent first display 161 and second display 162 are illustrated. According to movement of the first display 161 and/or the second display 162, the first side of the first display 161 and the second side of the second display 162 may become closer (or may meet). If the first display 161 and the second display 162 are adjacent to each other, the (1-1)-th indicator 61-1 may be displayed in a boundary area of the first side of the first display 161 and the (1-2)-th indicator 61-2 may be displayed in a boundary area of the second side of the second display 162.

With reference to FIG. 5g, the first display 161 and second display 162 that have changed to the extended mode are illustrated. As described above, the first side of the first display 161 and the second side of the second display 162 may be adjacent to each other. As an example, the protruding portion formed on the first side of the first display 161, and the insertion groove may be formed on the second side of the second display 162. The protruding portion of the first display 161 may insert into the insertion groove of the second display 162. As an example, the first side of the first display 161 may be formed with the uneven structure of the first shape, and the second side of the second display 162 may be formed with the uneven structure of the second shape corresponding to (or combinable with) the first shape. The uneven structure of the first shape of the first display 161 and the uneven structure of the second shape of the second display 162 may be combined (or adjacent, connected). The coupling member may be provided to the protruding portion (or uneven structure of first shape) of the first display 161 and the insertion groove (or uneven structure of second) of the second display 162). If the first display 161 and the second display 162 are adjacent, the first display 161 and the second display 162 may be stably adjacent (or connected) to each other by the lateral structure and the coupling member. If an adjacence process of the first display 161 and the second display 162 is completed, the electronic device 101 may not display the first indicator, the second indicator, and the third indicator.

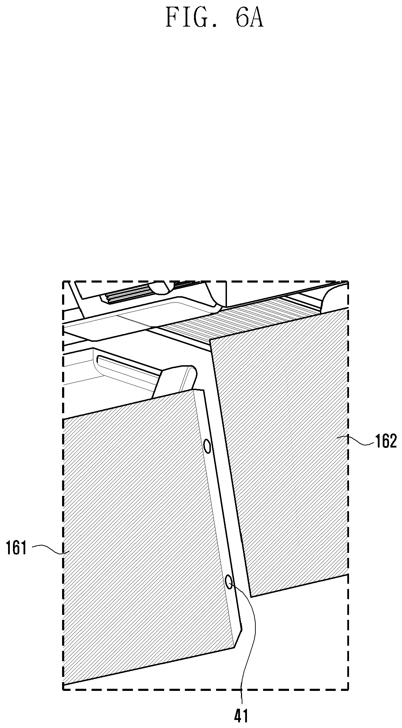

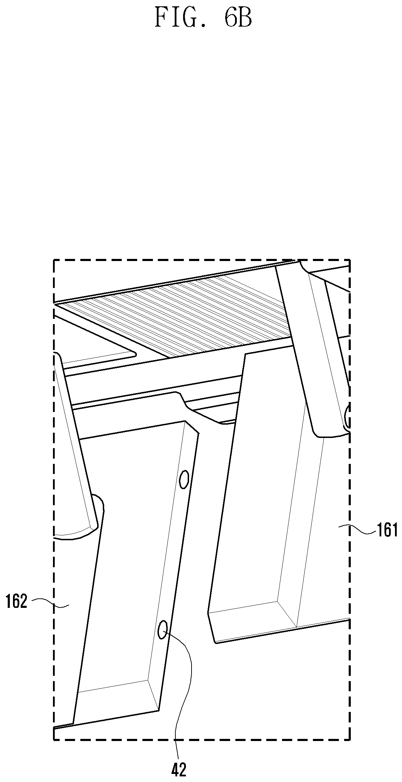

FIG. 6a and FIG. 6b illustrate the side structure of a display according to various embodiments.

With reference to FIG. 6a, a front perspective view of the first display 161 and the second display 162 is illustrated. With reference to FIG. 6b, a rear perspective view of the first display 161 and the second display 162 is illustrated.

With reference to FIG. 6a, the first side (e.g., right side) of the first display 161 and the second display 162 are illustrated. The first side of the first display 161 may be the surface that is adjacent to the second side (e.g., left side) of the second display 162. As an example, a first coupling member 41 may be arranged on the first side of the first display 161. For example, the plurality of first coupling members 41 may be arranged on the first side at a certain distance apart. As an example, a single first coupling member 41 may be arranged in a partial area of the first side, and may also be arranged in the entire area of the first side. For example, the first coupling member 41 may be a magnet or an electromagnet.

With reference to FIG. 6b, the first display 161 and the second side (e.g., left side) of the second display 162 are illustrated. The second side of the second display 162 may be the surface that is adjacent to the first side of the first display 161. As an example, a second coupling member 42 may be arranged on the second side of the second display 162. For example, the plurality of second coupling members 42 may be arranged on the second side at a certain distance apart. As an example, a single second coupling member 42 may be arranged in a partial area of the second side and may also be arranged in the entire area of the second side. A location of the second coupling member 42 arranged on the second side may be a location corresponding to a location of the first coupling member 41 arranged on the first side when the first display 161 and the second display 162 are adjacent to each other. For example, the second coupling member 42 may be a magnet or an electromagnet. When the first display 161 and the second display 162 are adjacent to each other, the first coupling member 41 of the first display 161 may be adjacent (or combined, connected) to the second coupling member 42 of the second display 162. As an example, the first coupling member 41 and the second coupling member 42 may have different polarities. If the first coupling member 41 and the second coupling member 42 become close within a predetermined distance according to the movement of the first display 161 and/or the second display 162, the first coupling member 41 and the second coupling member 42 may be magnetically coupled by the attractive force. The first coupling member 41 and the second coupling member 42 may make adjacence (or combination, connection) of the first display 161 and the second display 162 strong.

As an example, the first coupling member 41 and the second coupling member 42 may be electromagnets. If the first display 161 (or first coupling member 41) and the second display 162 (or second coupling member 42) are adjacent to each other, the electronic device 101 may apply current in different directions to the first coupling member 41 and the second coupling member 42, respectively. The first coupling member 41 and the second coupling member 42 to which the current is applied may be magnetically coupled, and adjacence (or combination, connection) of the first display 161 and second display 162 may become strong.

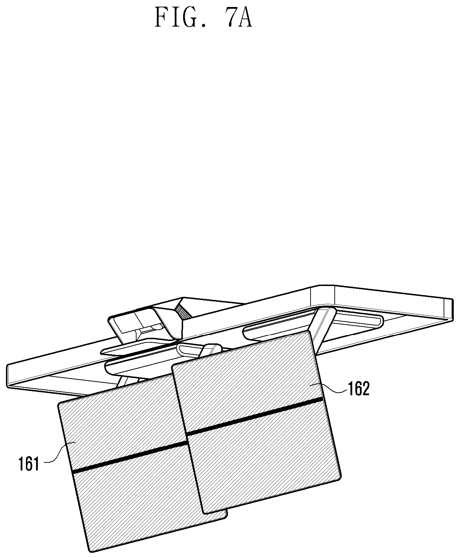

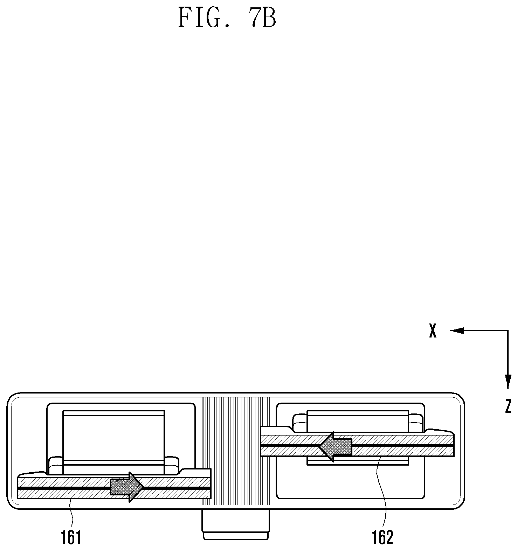

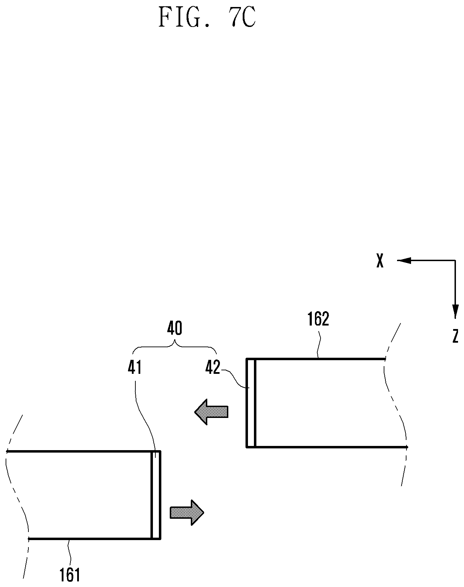

FIG. 7a, FIG. 7b, and FIG. 7c illustrate a process of moving a plurality of displays viewed at various tilt angles in the direction that make them adjacent each other according to various embodiments.

FIG. 7a illustrates a perspective view of the first display 161 and the second display 162 that move in left and right directions, FIG. 7b illustrates a bottom view thereof, and FIG. 7c illustrates an enlarged view of the first side of the first display 161 and the second side of the second display 162.

The electronic device 101 may move the first display 161 and/or the second display 162 in the left and right directions such that the first display 161 and the second display 162 are adjacent to each other, in order to change the plurality of displays to the extended mode (e.g., first mode or second mode). Initially, the electronic device 101 may match the tilt angle between the plurality of displays by adjusting the tilt angle of the first display 161 and/or the second display 162. As illustrated in FIG. 7a, the electronic device 101 may move the first display 161 and/or the second display 162 in the direction that makes them adjacent to each other. For example, as illustrated in FIG. 7b, the electronic device 101 may move the first display 161 in the -x-axis direction, and may move the second display 162 in the x-axis direction.

As an example, as illustrated in FIG. 7c, the first display 161 and the second display 162 may include the coupling member 40. The coupling member 40 may include the first coupling member 41 and the second coupling member 42. The first coupling member 41 may be arranged on the first side of the first display 161, and the second coupling member 42 may be arranged on the second side of the second display 162. As an example, as illustrated in FIG. 6a and FIG. 6b, the plurality of first coupling members 41 and second coupling members 42 may be arranged on the respective sides at a certain distance apart. As an example, as illustrated in FIG. 7c, a single first coupling member 41 and a single second coupling member 42 may be arranged on the entire area of each side.

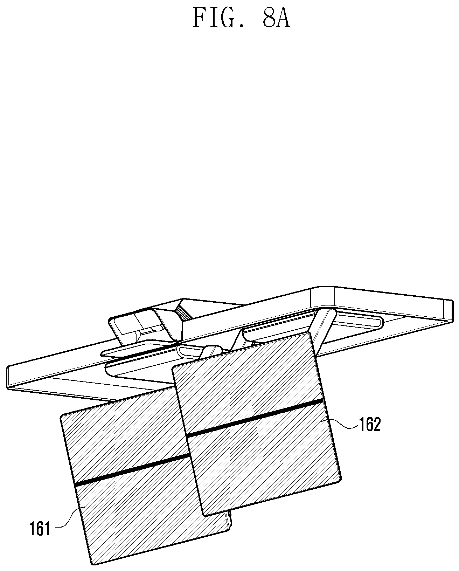

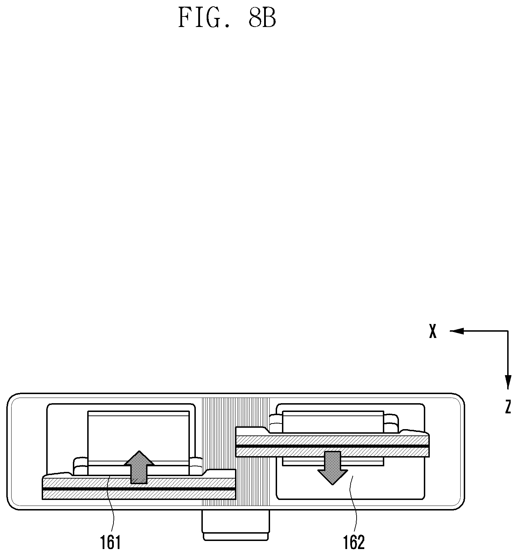

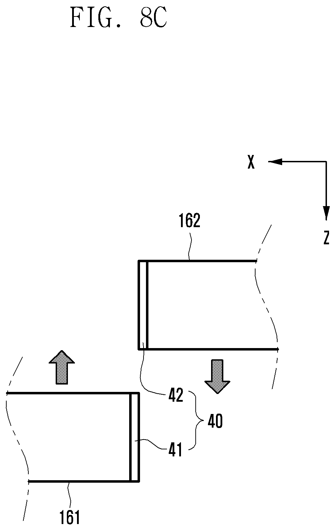

FIG. 8a, FIG. 8b, and FIG. 8c illustrate a process of making a plurality of displays viewed at various tilt angles adjacent to each other according to various embodiments.

FIG. 8a illustrates a perspective view of the first display 161 and the second display 162 that move forward and backward, FIG. 8b illustrates a bottom view thereof, and FIG. 8c illustrates an enlarged view of the first side of the first display 161 and the second side of the second display 162.

As illustrated in FIG. 8a, if the left-right movement of the first display 161 and/or the second display 162 is completed, the electronic device 101 may move the first display 161 and/or the second display 162 forward and backward. For example, as illustrated in FIG. 8b, the electronic device 101 may move the first display 161 in the -z-axis direction, and may move the second display 162 in the +z-axis direction.

As illustrated in FIG. 8c, since the left-right movement to make the first display 161 and the second display 162 adjacent to each other is completed, the electronic device 101 may move the first display 161 and/or the second display 162 forward and backward. As an example, the electronic device 101 may move the first display 161 and/or the second display 162 forward and backward until the first coupling member 41 of the first display 161 is positioned in an area corresponding to the second coupling member 42 of the second display 162.

For example, the electronic device 101 may change the order of or repeatedly perform the left-right movement control and forward-backward movement control of the first display 161 and/or the second display 162.

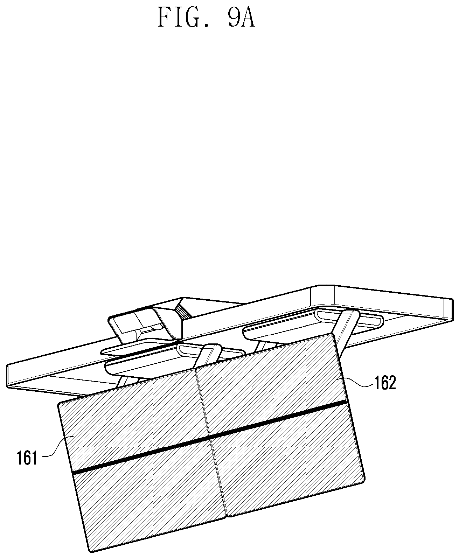

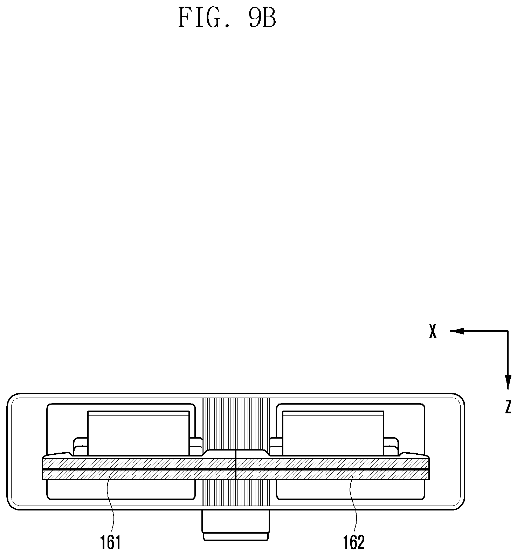

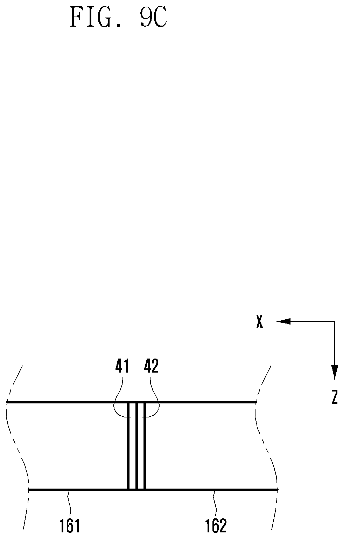

FIG. 9a, FIG. 9b, and FIG. 9c illustrate a plurality of adjacent displays viewed at various tilt angles according to various embodiments.

FIG. 9a illustrates a perspective view of the adjacent first display 161 and second display 162, FIG. 9b illustrates a bottom view thereof, and FIG. 9c illustrates an enlarged view of the first side of the first display 161 and the second side of the second display 162.

As illustrated in FIG. 9a, if the first display 161 and the second display 162 are adjacent to each other, the electronic device 101 may terminate movement of the first display 161 and/or the second display 162. If the first display 161 and the second display 162 are adjacent to each other, the electronic device 101 may control the first display 161 and the second display 162 to be a single display with a large screen. As illustrated in FIG. 9b, the adjacent first display 161 and second display 162 may form the same tilt angle on the same plane.

As illustrated in FIG. 9c, if the first display 161 and the second display 162 are adjacent to each other, the first display 161 and the second display 162 may be strongly adjacent (or combined, connected) by way of the coupling member 40 (e.g., first coupling member 41 and second coupling member 42). For example, if the first coupling member 41 and the second coupling member 42 are magnets, the first display 161 and the second display 162 may be strongly maintained in the adjacent state by the magnetic force of the magnets. For example, if the first coupling member 41 and the second coupling member 42 are electromagnets, the electronic device 101 may determine whether the first display 161 and the second display 162 are normally adjacent. When the electronic device 101 determines that they are normally adjacent, the electronic device 101 may apply current to the electromagnets to make adjacence between the first display 161 and the second display 162 strong.

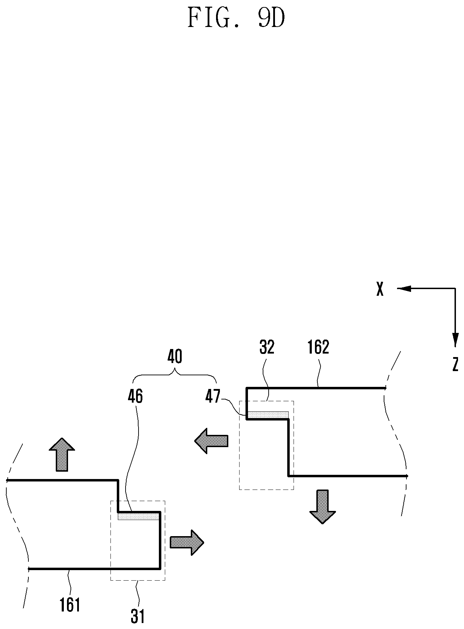

FIG. 9d illustrates the combined structure of a plurality of displays according to various embodiments.

With reference to FIG. 9d, a protruding portion 31 may be formed on the first side of the first display 161, and an insertion groove 32 may be formed on the second side of the second display 162. The second side of the second display 162 may be the surface that is adjacent to the first side of the first display 161. As an example, the first side of the first display 161 may be formed with the uneven structure of the first shape, and the second side of the second display 162 may be formed with the uneven structure of the second shape corresponding to (or combinable with) the first shape. The coupling member 40 may be provided to the protruding portion 31 (or uneven structure of first shape) and insertion groove 32 (or uneven structure of second shape). The coupling member 40 may include a third coupling member 46 and a fourth coupling member 47. The third coupling member 46 may be arranged in the protruding portion 31 of the first display 161, and the fourth coupling member 47 may be arranged in the insertion groove 32 of the second display 162. For example, the coupling member 40 may be a magnet or an electromagnet. The third coupling member 46 and the fourth coupling member 47 may have opposite polarities.

The electronic device 101 may move the first display 161 and/or the second display 162 in the left and right directions such that the first display 161 and the second display 162 are adjacent to each other. For example, the electronic device 101 may move the first display 161 in -x-axis direction, and may move the second display 162 in +x-axis direction. If the left-right movement of the first display 161 and/or the second display 162 is completed, the electronic device 101 may move the first display 161 and/or the second display 162 forward and backward. For example, the electronic device 101 may move the first display 161 in -z-axis direction, and may move the second display 162 in +z-axis direction.

As an example, when the electronic device 101 may move the first display 161 and/or the second display 162 forward and backward until the protruding portion 31 of the first display 161 inserts into the insertion groove 32 of the second display 162. As an example, the electronic device 101 may move the first display 161 and/or the second display 162 forward and backward until the uneven structure of the first shape of the first display 161 and the uneven structure of the second shape of the second display 162 are combined. For example, the electronic device 101 may change the order of or repeatedly perform the left-right movement control and forward-backward movement control of the first display 161 and/or the second display 162.

For example, when the first display 161 and the second display 162 are adjacent to each other, the protruding portion 31 of the first display 161 may insert into the insertion groove 32 of the second display 162. As an example, the uneven structure of the first shape of the first display 161 and the uneven structure of the second shape of the second display 162 may be combined (or adjacent, connected). If the protruding portion 31 (or uneven structure of first shape inserts into (combines with) the insertion groove 32 (or uneven structure of second shape), the third coupling member 46 of the protruding portion 31 (or uneven structure of first shape) and the fourth coupling member 47 of the insertion groove 32 (or uneven structure of second shape) may make adjacence (or combination, connection) between the first display 161 and the second display 162 strong.

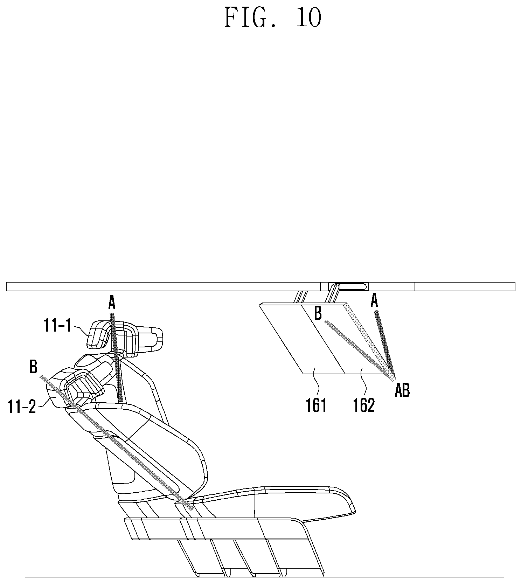

FIG. 10 illustrates an example of adjusting the tilt angle of a plurality of adjacent displays according to various embodiments.

With reference to FIG. 10, the electronic device 101 may adjust the tilt angle of a plurality of adjacent displays based on a preset reference location. For example, the preset reference location may include a location of a user or a location of a seat. The electronic device 101 may adjust the tilt angle of the plurality of adjacent displays as if they were a single display. That is, the electronic device 101 may adjust the first display 161 and the second display 162 together at the same time and the same tilt angle. The electronic device 101 may adjust the tilt angle of the plurality of adjacent displays to an optimal location at which the user may view content.

For example, the electronic device 101 may include a sensor (e.g., sensor module 176 of FIG. 1) configured to detect the user (or seat). As an example, the sensor may include an optical measurement sensor (OMS), a depth measurement sensor (DMS), Time-of-Flight (TOF), a seat sensor, and/or a seat angle sensor. The OMS may acquire distance and/or location information of the user (or seat) using light. The DMS may acquire information of the user (or seat) by measuring the depth and/or distance from the user (or seat). The ToF may acquire distance, location, and/or depth information of the user (or seat) by measuring a travel time of light. The camera may photograph the user and may acquire status and/or distance information of the user (or seat) based on a captured image. As an example, the electronic device 101 may include a sensor configured to detect ambient brightness. The electronic device 101 may adjust the brightness of the plurality of displays based on the detected ambient brightness.

When only the first user 1 is seated in the first seat 11-1, the electronic device 101 may adjust the tilt angle of the plurality of adjacent displays based on the first seat 11-1 (or first user 1) (e.g., first mode). For example, if the tilt angle of the first seat 11-1 is A, the electronic device 101 may adjust the tilt angle of the plurality of displays to A. When only the second user 2 is seated in the second seat 11-2, the electronic device 101 may adjust the tilt angle of the plurality of adjacent displays based on the second seat 11-2 (or second user 2) (e.g., first mode). For example, if the tilt angle of the second seat 11-2 is B, the electronic device 101 may adjust the tilt angle of the plurality of displays to B.

When the first user 1 is seated in the first seat 11-1 and the second user 2 is seated in the second seat 11-2, the electronic device 101 may adjust the tilt angle of the plurality of adjacent displays in consideration of the first seat 11-1 (or first user 1) and the second seat 11-2 (or second user 2) (e.g., second mode). For example, if the tilt angle of the first seat 11-1 is A and the tilt angle of the second seat 11-2 is B, the electronic device 101 may adjust the tilt angle of the plurality of displays to the tilt angle corresponding to the intermediate range between A and B (e.g., average tilt angle). As an example, if the tilt angle of the first seat 11-1 is about -10 degrees and the tilt angle of the second seat 11-2 is about -30 degrees, the electronic device 101 may adjust the tilt angle of the plurality of displays to about -20 degrees. Alternatively, the electronic device 101 may adjust the tilt angle of the plurality of displays to the tilt angle within the range of about -25 degrees to about -15 degrees.

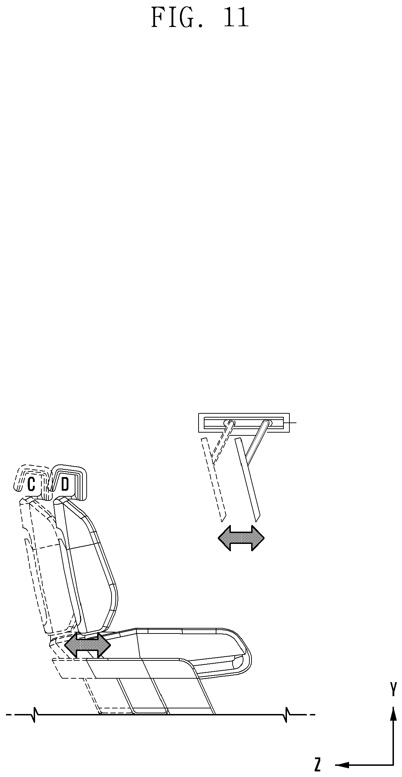

FIG. 11 illustrates an example of adjusting the distance between a plurality of adjacent displays according to various embodiments.

With reference to FIG. 11, the electronic device 101 may adjust the distance of the plurality of adjacent displays based on a preset reference location. For example, the preset reference location may include a location of the user or a location of the seat. The electronic device 101 may adjust the distance from the preset reference location by considering the plurality of adjacent displays as a single display. The electronic device 101 may adjust the distance of the plurality of adjacent displays to an optimal location at which the user may view content. As an example, the optimal distance of the display for the user to view the content may be about 1 m.

When only the first user 1 is seated in the first seat 11-1, the electronic device 101 may adjust the distance of the plurality of adjacent displays based on the first user 1 (or first seat 11-1) (e.g., first mode). For example, the electronic device 101 may adjust the distance of the plurality of displays to about 1 m (or distance within range of about 1 m) from the first user 1. As an example, if the preset reference location is the first seat 11-1 and the location of the first seat 11-1 is C, the electronic device 101 may adjust the distance from the plurality of displays to about 1.15 m (or distance within range of about 1.15 m) from the first seat 11-1 in consideration of the head size of the first user 1.

When only the second user 2 is seated in the second seat 11-2, the electronic device 101 may adjust the distance of the plurality of adjacent displays based on the second user 2 (or second seat 11-2) (e.g., first mode). For example, the electronic device 101 may adjust the distance of the plurality of displays to about 1 m (or distance within range of about 1m) from the second user 2. As an example, if a location of the second seat 11-2 is D, the electronic device 101 may adjust the distance of the plurality of displays to about 1.15 m (or distance within range of about 1.15m) from the second seat 11-2 in consideration of the head size of the second user 2.

When the first user 1 is seated in the first seat 11-1 and the second user 2 is seated in the second seat 11-2, the electronic device 101 may adjust the distance of the plurality of adjacent displays in consideration of the first user 1 (or first seat 11-1) and the second user 2 (or second seat 11-2) (e.g., second mode). For example, the electronic device 101 may adjust the distance of the plurality of displays to about 1 m (or distance within range of about 1m) from an average location of the first user 1 and the second user 2. As an example, if a location of the first seat 11-1 is C and a location of the second seat 11-2 is D, the electronic device 101 may adjust the distance of the plurality of displays to about 1.15 m (or distance within range of about 1.15m) from an average location of C and D in consideration of the head size of the first user 1 and second user 2.

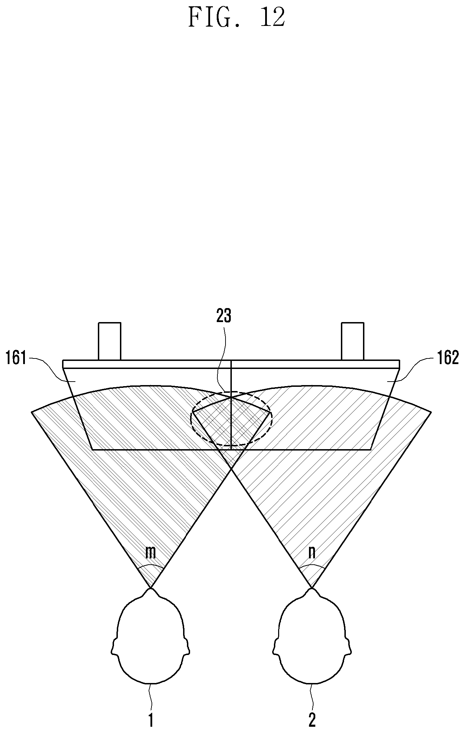

FIG. 12 illustrates the center location of a plurality of adjacent displays according to various embodiments.

With reference to FIG. 12, the left-right viewing angle of the user and a central area of the left-right viewing angle are illustrated. The electronic device 101 may identify a location of the user using the sensor. The electronic device 101 may identify the viewing angle of the first user based on the location of the first user 1 and may identify the viewing angle of the second user based on the location of the second user 2. The left-right viewing angle of the first user 1 may be m, and the left-right viewing angle of the second user 2 may be n. As an example, the left-right viewing angle of the user may be about -30 degrees to 30 degrees relative to the user's light of sight.

For example, the electronic device 101 may determine an area in which a 30-degree area to the right based on the frontal direction of the first user 1 and a 30-degree area to the left based on the frontal direction of the and second user 2 intersect as a central area 23 of the left-right viewing angle of the plurality of users. The electronic device 101 may adjust a location of the center point of the plurality of adjacent displays to position the center point of the plurality of adjacent displays within the determined central area 23.

As an example, the electronic device 101 may additionally adjust the tilt angle of the plurality of adjacent displays based on the up-down viewing angle of the user. As an example, the up-down viewing angle of the user may be about -35 degrees to about 25 degrees relative to the user's line of sight. The electronic device 101 may additionally adjust the tilt angle of the plurality of displays to the tilt angle corresponding to the intermediate range of an area in which an area about 25 upward relative to the frontal direction of the first user 1 and an area about 25 degrees upward relative to the frontal direction of the second user 2 intersect.

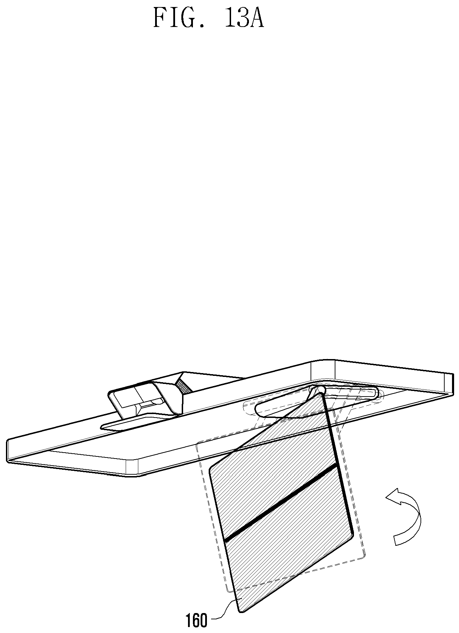

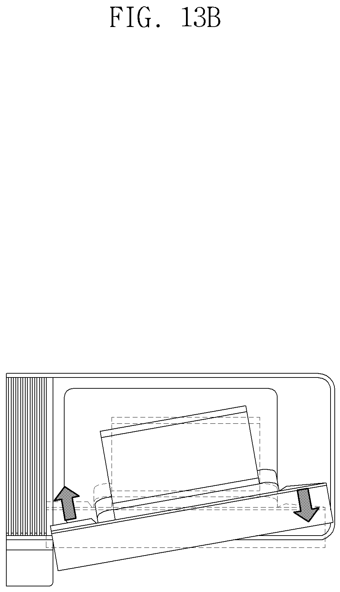

FIG. 13a and FIG. 13b illustrate an example of rotating a display according to various embodiments. FIG. 13a illustrates a perspective view of the rotating display 160, and FIG. 13b illustrates a bottom view thereof.

As an example, the seat 11 of the vehicle 10 may rotate. For example, the electronic device 101 may detect the state of the seat 11 using the sensor. The electronic device 101 may acquire rotation direction and tilt angle information of the seat 11 based on the detected state of the seat 11. For example, the electronic device 101 may acquire the rotation direction and tilt angle information of the seat 11 from the vehicle 10.

The electronic device 101 may rotate the display 160 to correspond to the rotated seat 11 based on the acquired rotation direction and tilt angle information of the seat 11. As an example, if the first seat 11-1 rotates, the electronic device 101 may rotate the first display 161. If the second seat 11-2 rotates, the electronic device 101 may rotate the second display 162. As an example, when the first user 1 is seated only in the first seat 11-1 and the first seat 11-1 is rotated, the electronic device 101 may rotate the plurality of displays changed to the extended mode to correspond to the first seat 11-1 (or first user 1).

For example, the display 160 may include a hinge that is rotatable on the plane. The electronic device 101 may rotate the display 160 in the left and right direction based on the rotatable hinge.

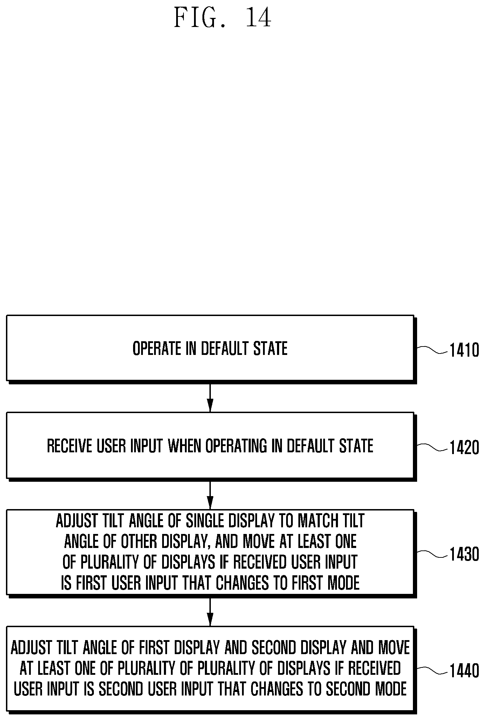

FIG. 14 is a flowchart describing a display control method according to various embodiments.

In the following embodiment, each of operations may be sequentially performed, but is not necessarily performed in a sequential manner. For example, the order of each of the operations may be changed, and at least two operations may be performed in parallel.

According to an embodiment, 1410 to 1440 may be understood to be performed by a processor (e.g., processor 120 of FIG. 2) of an electronic device (e.g., electronic device 101 of FIG. 2).

With reference to FIG. 14, the electronic device 101 may operate (or set) a plurality of displays in a default state (1410). The electronic device 101 may include the plurality of displays including the first display 161 and the second display 162. In the default state, the first display 161 may have the first tilt angle, and may be separate at the first distance from the first user 1. In the default state, the second display 162 may have the second tilt angle, and may be separate at the second distance from the second user 2. For example, the default state may be a state in which the first display 161 and the second display 162 are separate from each other and independently display content. In the default state, the first distance of the first display 161 and the second distance of the second display 162 may be individually adjusted. In the default state, the tilt angle of the first display 161 and the tilt angle of the second display 162 may be individually adjusted.

When the plurality of displays operate in the default state, the electronic device 101 may receive a user input (1420). For example, the electronic device 101 may receive the user input from the first user. As an example, if the display 160 is implemented as a touch display, the electronic device 101 may receive the user input through the first display 161 and may identify an input received from the first user 1. As another example, the electronic device 101 may receive identification information of the first terminal device of the first user 1 and/or identification information of the first display 161 along with the user input through the communication interface. The electronic device 101 may identify the input received from the first user 1 based on the received identification information.

For example, the user input may be an input that changes the display 160 from the default state to the extended mode. As an example, the extended mode may include a first mode and a second mode. The first mode may be the extended mode for a single user, and the second mode may be the extended mode for a plurality of users. As an example, the electronic device 101 may display a menu for selecting the default state, the first mode, and the second mode on the first display 161 and/or the second display 162, and may receive the user input for selecting one from the displayed menu. As an example, the electronic device 101 may identify the number of users based on information on the detected user. If a single user is identified, the electronic device 101 may determine the received user input as an input that changes to the first mode. If the plurality of users are identified, the electronic device 101 may determine the received user input as an input that changes to the second mode.

As an example, the electronic device 101 may display the message 51 for requesting approval of the extended mode on the second display 162. If the electronic device 101 receives an extended mode request from the first user 1, the electronic device 101 may display the message 51 for requesting approval of the extended mode on the second display 162 corresponding to the second user 2.

If the electronic device 101 receives the user input that approves the extended mode, the electronic device 101 may make the plurality of displays adjacent (or mechanically combined or connected) to each other by adjusting the tilt angle and location of at least one display among the plurality of displays. As an example, when changing to the first mode, the electronic device 101 may omit an operation of displaying the message 51 for asking for approval of the extended mode.

If the received user input is a first user input that changes to the first mode, the electronic device 101 may adjust the tilt angle of a single display to match the tilt angle of the other display, and may move at least one of the plurality of displays (1430). For example, if the user input is the first user input that changes to the first mode for displaying content across the first display 161 and the second display 162 for a single user in the default state, the electronic device 101 may adjust the tilt angle of one of the first display 161 and the second display 162 to match the tilt angle of the remaining one of the first display 161 and the second display 162. The electronic device 101 may move at least one of the plurality of displays such that the first display 161 and the second display 162 are positioned adjacent to each other on the same plane. For example, the electronic device 101 may move the first display 161 and/or the second display 162 in the left-right and forward-backward directions.

If the received user input is the second user input that changes to the second mode, the electronic device 101 may adjust the tilt angle of the first display 161 and the second display 162, and may move at least one of the plurality of displays (1440). For example, if the user input is the second user input that changes from the default state to the second mode for displaying the content across the first display 161 and the second display 162 for the plurality of users, the electronic device 101 may adjust the tilt angle of both the first display 161 and the second display 162. The electronic device 101 may move at least one of the plurality of displays such that the first display 161 and the second display 162 are positioned adjacent to each other on the same plane. For example, the electronic device 101 may move the first display 161 and/or the second display 162 in the left-right and forward-backward directions.

When performing an operation of making the plurality of displays adjacent to each other, the electronic device 101 may provide visual feedback to each of the first display 161 and the second display 162 to make it possible to recognize the state of the display 160. For example, the visual feedback may include an indicator (or marker). The indicator may include a first indicator indicating the distance between the plurality of displays. As an example, the indicator may include a second indicator and a third indicator related to the tilt angle of a corresponding display in each of the plurality of displays. The electronic device 101 may move each of a location of the second indicator and a location of the third indicator according to the change in the tilt angle of the first display 161 and the second display 162. Also, the electronic device 101 may move the first indicator based on the distance between the plurality of displays according to the movement of the first display 161 and/or the second display 162.

For example, the electronic device 101 may adjust the tilt angle and/or distance of the plurality of adjacent displays based on a preset reference location. For example, the preset reference location may include a location of the user or a location of the seat. The electronic device 101 may adjust the tilt angle and/or distance of the plurality of adjacent displays based on the user on board. The electronic device 101 may adjust the tilt angle and/or distance of the plurality of adjacent displays such that the user on board may view the content in an optimal state. As an example, the electronic device 101 may detect brightness of an ambient environment, and may adjust the brightness of the display 160 based on the detected brightness.

As an example, the electronic device 101 may include the plurality of displays 160 including the first display 161 and the second display 162, at least one processor 120, and the memory 130 configured to store instructions executed by the at least one processor 120. The instructions stored in the memory 130 may cause the electronic device 101 to operate in a default state in which the first tilt angle related to the first display 161 and the second tilt angle related to the second display 162 are individually adjusted. The instructions stored in the memory 130 may cause the electronic device 101 to perform an operation of receiving a user input when operating in the default state. The instructions stored in the memory 130 may cause the electronic device 101 to perform an operation of, if the user input is a first user input that changes from the default state to a first mode of displaying content across the first display 161 and the second display 162 for a single user, adjusting a tilt angle of one of the first display 161 and the second display 162 to match a tilt angle of the remaining one of the first display 161 and the second display 162, and moving at least one of the plurality of displays such that the first display 161 and the second display 162 are positioned adjacent to each other on the same plane. The instructions stored in the memory 130 may cause the electronic device 101 to perform an operation of, if the user input is a second user input that changes from the default state to a second mode of displaying the content across the first display 161 and the second display 162 for a plurality of users, adjusting the tilt angle of both the first display 161 and the second display 162 and moving at least one of the plurality of displays such that the first display 161 and the second display 162 are positioned adjacent to each other on the same plane.

As an example, the first display 161 and the second display 162 may be positioned at a first location in the first mode. The first display 161 and the second display 162 may be positioned at a second location different from the first location in the second mode.

As an example, the instructions stored in the memory 130 may cause the electronic device 101 to perform an operation of displaying a first indicator that indicates the distance between the plurality of displays.

As an example, the instructions stored in the memory 130 may cause the electronic device 101 to perform an operation of moving the first indicator based on the distance between the plurality of displays according to movement of the at least one display among the plurality of displays.

As an example, the instructions stored in the memory 130 may cause the electronic device 101 to perform an operation of adjusting the size of the first indicator as the display on which the first indicator is displayed moves forward or backward.

As an example, the instructions stored in the memory 130 may cause the electronic device 101 to perform an operation of displaying a second indicator related to the first tilt angle on the first display 161 and displaying a third indicator related to the second tilt angle on the second display 162.

As an example, the instructions stored in the memory 130 may cause the electronic device 101 to perform an operation of, if the first tilt angle is greater than the second tilt angle based on a vertical line, displaying the second indicator in an upper portion of the first display 161 and displaying the third indicator in a lower portion of the second display 162. The instructions stored in the memory 130 may cause the electronic device 101 to perform an operation of, if the first tilt angle decreases, moving the second indicator displayed in the upper portion of the first display 161 to a central area and, if the second tilt angle increases, moving the third indicator displayed in the lower portion of the second display 162 to the central area.

As an example, the electronic device 101 may further include the protruding portion 31 formed on the first side of the first display 161 and the coupling member 40 arranged on one surface of the protruding portion 31.

As an example, the electronic device 101 may further include the insertion groove 32 formed on the second side of the second display 162 and into which the protruding portion 31 formed on the first display 161 inserts and the coupling member 40 arranged on one surface of the insertion groove 32.

As an example, the coupling member 40 may include a magnet or an electromagnet.

As an example, the electronic device 101 may further include a first sensor configured to detect a location of a user. The instructions stored in the memory 130 may cause the electronic device 101 to perform an operation of identifying the viewing angle of the first user based on a location of the first user and identifying the viewing angle of the second user based on a location of the second user in the second mode. The instructions stored in the memory 130 may cause the electronic device 101 to perform an operation of locating a center point of the plurality of displays in an area in which the viewing angle of the first user and the viewing angle of the second user intersect. The instructions stored in the memory 130 may cause the electronic device 101 to perform an operation of adjusting the tilt angle of the plurality of displays to be included in the range between the viewing angle of the first user and the viewing angle of the second user, or adjusting the distance of the plurality of displays to be included in the range between the distance from the first user and the distance from the second user based on the plurality of displays.

As an example, the electronic device 101 may further include a second sensor configured to detect ambient brightness. The instructions stored in the memory 130 may cause the electronic device 101 to perform an operation of adjusting the brightness of the plurality of displays based on the ambient brightness.

As an example, a method of controlling a plurality of displays including the first display 161 and the second display 162 may include operating in a default state in which a first tilt angle related to the first display 161 and a second tilt angle related to the second display 162 are individually adjusted. The method may include receiving a user input when operating in the default state. The method may include if the user input is a first user input that changes from the default state to a first mode of displaying content across the first display 161 and the second display 162 for a single user, adjusting a tilt angle of one of the first display 161 and the second display 162 to match a tilt angle of the remaining one of the first display 161 and the second display 162, and moving at least one of the plurality of displays such that the first display 161 and the second display 162 are positioned adjacent to each other on the same plane. The method may include if the user input is a second user input that changes from the default state to a second mode of displaying the content across the first display 161 and the second display 162 for a plurality of users, adjusting the tilt angle of both the first display 161 and the second display 162 and moving at least one of the plurality of displays such that the first display 161 and the second display 162 are positioned adjacent to each other on the same plane.

As an example, in the method, the first display 161 and the second display 162 may be positioned at a first location in the first mode. In the method, the first display 161 and the second display 162 may be positioned at a second location different from the first location in the second mode.

As an example, the method may further include displaying a first indicator that indicates the distance between the plurality of displays.

As an example, the displaying of the first indicator may include moving the first indicator based on the distance between the plurality of displays according to the movement of the at least one display among the plurality of displays.

As an example, the displaying of the first indicator may include adjusting the size of the first indicator as the display on which the first indicator is displayed moves forward or backward.

As an example, the method may further include displaying a second indicator related to the first tilt angle on the first display 161, and displaying a third indicator related to the second tilt angle on the second display 162.

As an example, the displaying of the second indicator and the third indicator may include, if the first tilt angle is greater than the second tilt angle based on a vertical line, displaying the second indicator in an upper portion of the first display 161, and displaying the third indicator in a lower portion of the second display 162, and if the first tilt angle decreases, moving the second indicator displayed in the upper portion of the first display 161 to a central area and, if the second tilt angle increases, moving the third indicator displayed in the lower portion of the second display 162 to the central area.

As an example, instructions of a non-transitory computer-readable recording medium storing a program that performs a method of controlling a plurality of displays including the first display 161 and the second display 162 may cause the electronic device 101 to operate in a default state in which a first tilt angle related to the first display 161 and a second tilt angle related to the second display 162 are individually adjusted. The instructions may cause the electronic device 101 to perform an operation of receiving a user input when operating in the default state. The instructions may cause the electronic device 101 to perform an operation of, if the user input is a first user input that changes from the default state to a first mode of displaying content across the first display 161 and the second display 162 for a single user, adjusting a tilt angle of one of the first display 161 and the second display 162 to match a tilt angle of the remaining one of the first display 161 and the second display 162, and moving at least one of the plurality of displays such that the first display 161 and the second display 162 are positioned adjacent to each other on the same plane. The instructions may cause the electronic device 101 to perform an operation of, if the user input is a second user input that changes from the default state to a second mode of displaying the content across the first display 161 and the second display 162 for a plurality of users, adjusting the tilt angle of both the first display 161 and the second display 162 and moving at least one of the plurality of displays such that the first display 161 and the second display 162 are positioned adjacent to each other on the same plane.

It should be appreciated that various examples of the disclosure and the terms used therein are not intended to limit the technological features set forth herein to particular examples and include various changes, equivalents, or replacements for a corresponding example. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it denotes that the element may be coupled with the other element directly (e.g., wiredly), wirelessly, or via a third element.

As used in connection with various examples of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an example, the module may be implemented in a form of an application-specific integrated circuit (ASIC).

Various examples as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an example, a method according to various examples of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various examples, each component (e.g., a module or a program) of the above-described components may include a single entity or multiple entities, and some of the multiple entities may be separately disposed in different components. According to various examples, one or more of the above-described components may be omitted, or one or more other components may be added. Alternatively or additionally, a plurality of components (e.g., modules or programs) may be integrated into a single component. In such a case, according to various examples, the integrated component may still perform one or more functions of each of the plurality of components in the same or similar manner as they are performed by a corresponding one of the plurality of components before the integration. According to various examples, operations performed by the module, the program, or another component may be carried out sequentially, in parallel, repeatedly, or heuristically, or one or more of the operations may be executed in a different order or omitted, or one or more other operations may be added.

The effects set forth herein are not limited to the above-described effects, and still other effects not mentioned herein will be clearly understood by one of ordinary skill in the art from the following description.

## Claims

1. An electronic device comprising:
a plurality of displays including a first display and a second display;
at least one processor; and
memory configured to store instructions executed by the at least one processor,
wherein the instructions stored in the memory cause the electronic device to perform:
an operation of operating in a default state in which a first tilt angle related to the first display and a second tilt angle related to the second display are individually adjusted;
an operation of receiving a user input when operating in the default state;
an operation of, if the user input is a first user input that changes from the default state to a first mode of displaying content across the first display and the second display for a single user, adjusting a tilt angle of one of the first display and the second display to match a tilt angle of the remaining one of the first display and the second display, and moving at least one of the plurality of displays such that the first display and the second display are positioned adjacent to each other on the same plane; and
an operation of, if the user input is a second user input that changes from the default state to a second mode of displaying the content across the first display and the second display for a plurality of users, adjusting the tilt angle of both the first display and the second display and moving at least one of the plurality of displays such that the first display and the second display are positioned adjacent to each other on the same plane.

2. The electronic device of claim 1, wherein the first display and the second display are positioned at a first location in the first mode, and
the first display and the second display are positioned at a second location different from the first location in the second mode.

3. The electronic device of claim 1, wherein the instructions stored in the memory cause the electronic device to perform an operation of displaying a first indicator that indicates the distance between the plurality of displays.

4. The electronic device of claim 3, wherein the instructions stored in the memory cause the electronic device to perform an operation of moving the first indicator based on the distance between the plurality of displays according to movement of the at least one display among the plurality of displays.

5. The electronic device of claim 3, wherein the instructions stored in the memory cause the electronic device to perform an operation of adjusting the size of the first indicator as the display on which the first indicator is displayed moves forward or backward.

6. The electronic device of claim 1, wherein the instructions stored in the memory cause the electronic device to perform an operation of displaying a second indicator related to the first tilt angle on the first display and displaying a third indicator related to the second tilt angle on the second display.

7. The electronic device of claim 6, wherein the instructions stored in the memory cause the electronic device to perform:
an operation of, if the first tilt angle is greater than the second tilt angle based on a vertical line, displaying the second indicator in an upper portion of the first display and displaying the third indicator in a lower portion of the second display; and
an operation of, if the first tilt angle decreases, moving the second indicator displayed in the upper portion of the first display to a central area and, if the second tilt angle increases, moving the third indicator displayed in the lower portion of the second display to the central area.

8. The electronic device of claim 1, further comprising:
a protruding portion formed on the first side of the first display; and
a coupling member arranged on one surface of the protruding portion.

9. The electronic device of claim 1, further comprising:
an insertion groove formed on the second side of the second display, and into which a protruding portion formed on the first display inserts; and
a coupling member arranged on one surface of the insertion groove.

10. The electronic device of claim 9, wherein the coupling member includes a magnet or an electromagnet.

11. The electronic device of claim 1, further comprising:
a first sensor configured to detect a location of a user,
wherein the instructions stored in the memory cause the electronic device to perform:
an operation of identifying a viewing angle of the first user based on a location of the first user and identifying a viewing angle of the second user based on a location of the second user in the second mode;
an operation of locating a center point of the plurality of displays in an area in which the viewing angle of the first user and the viewing angle of the second user intersect;
an operation of adjusting the tilt angle of the plurality of displays to be included in the range between the viewing angle of the first user and the viewing angle of the second user, or adjusting the distance of the plurality of displays to be included in the range between the distance from the first user and the distance from the second user based on the plurality of displays.

12. The electronic device of claim 1, further comprising:
a second sensor configured to detect ambient brightness,
wherein the instructions stored in the memory cause the electronic device to perform an operation of adjusting the brightness of the plurality of displays based on the ambient brightness.

13. A method of controlling a plurality of displays including a first display and a second display, the method comprising:
operating in a default state in which a first tilt angle related to the first display and a second tilt angle related to the second display are individually adjusted;
receiving a user input when operating in the default state;
if the user input is a first user input that changes from the default state to a first mode of displaying content across the first display and the second display for a single user, adjusting a tilt angle of one of the first display and the second display to match a tilt angle of the remaining one of the first display and the second display, and moving at least one of the plurality of displays such that the first display and the second display are positioned adjacent to each other on the same plane; and
if the user input is a second user input that changes from the default state to a second mode of displaying the content across the first display and the second display for a plurality of users, adjusting the tilt angle of both the first display and the second display and moving at least one of the plurality of displays such that the first display and the second display are positioned adjacent to each other on the same plane.

14. The method of claim 13, wherein the first display and the second display are positioned at a first location in the first mode, and
the first display and the second display are positioned at a second location different from the first location in the second mode.

15. The method of claim 13, further comprising:
displaying a first indicator that indicates the distance between the plurality of displays.
